# EUROPÄISCHE PATENTSCHRIFT

(11) **EP 4 004 282 B1**
(45) Veröffentlichungstag und Bekanntmachung des Hinweises auf die Patenterteilung: **08.01.2025**
(21) Anmeldenummer: 20747369.5
(22) Anmeldetag: 24.07.2020
(51) Int. Cl.: D21G 1/02, G01L 5/00

(54) **TECHNISCHE WALZE, INSBESONDERE FÜR DIE PAPIERHERSTELLUNG, VERFAHREN ZUM EINBRINGEN EINER POLYMERFASER IN EIN LEERROHR EINER TECHNISCHEN WALZE UND VERWENDUNG EINER POLYMERFASER**
TECHNICAL ROLL, IN PARTICULAR FOR PAPER MANUFACTURING, METHOD FOR INTRODUCING A POLYMER FIBRE INTO AN EMPTY DUCT OF A TECHNICAL ROLL, AND USE OF A POLYMER FIBRE
CYLINDRE TECHNIQUE, EN PARTICULIER POUR LA FABRICATION DE PAPIER, PROCÉDÉ POUR INTRODUIRE UNE FIBRE POLYMÈRE DANS UN TUBE VIDE D'UN CYLINDRE TECHNIQUE ET UTILISATION D'UNE FIBRE POLYMÈRE

(30) Priorität: 24.07.2019 DE 102019120052
(43) Veröffentlichungstag der Anmeldung: 01.06.2022
(73) Patentinhaber: SchäferRolls GmbH & Co. KG, 71272 Renningen (DE)
(72) Erfinder: SOHL, Carsten, 7000 Fredericia (DK); NEDANOV, Michail, 71272 Renningen (DE)
(74) Vertreter: Witte, Weller & Partner Patentanwälte mbB
(86) Internationale Anmeldenummer: PCT/EP2020/070947
(87) Internationale Veröffentlichungsnummer: WO 2021/013987

(56) Entgegenhaltungen:
- WO-A1-2012/113747
- WO-A1-2013/104600
- WO-A1-2015/181155
- DE-A1- 1 504 702
- US-A1- 2001 032 924

## Beschreibung

Die vorliegende Erfindung betrifft eine technische Walze, insbesondere für die Papierherstellung, mit einem länglichen Walzenkern und zumindest einem ersten Bezug, der auf dem Walzenkern vorgesehen ist. Die Erfindung betrifft ferner ein Verfahren zum Einbringen einer Polymerfaser in ein Leerrohr einer technischen Walze.

In vielen unterschiedlichen technischen Bereichen, insbesondere auch in der Papierindustrie, werden Walzen mit ein oder mehrschichtigen Bezügen verwendet. Bei diesen ein- oder mehrschichtigen Bezügen kann es sich um Gummi-Bezüge, Komposit-Bezüge oder Polyurethan-Bezüge handeln, um nur die wichtigsten zu nennen.

Während des Betriebs solcher Walzen sind für die optimale Einstellung der jeweiligen Anlage verschiedene Parameter, wie Temperatur im Walzenbezug oder auf die Walzenoberfläche wirkende Druckbelastungen von Bedeutung. Sind diese Parameter bekannt, lässt sich beispielsweise der sogenannte Nip bei zwei zusammenwirkenden Walzen sehr gut einstellen.

Die Erfassung dieser Parameter ist jedoch sehr aufwändig und im Echtzeitbetrieb der Anlage nur schwer möglich. Im Stand der Technik gibt es Lösungen, bei denen in der Walze ein oder mehrere Sensoren ortsfest integriert sind und entsprechende Parameter erfassen. Derartige Sensoren werden bei der Herstellung der Walze und noch vor dem Auftragen des Bezugs vorgesehen. In der Regel sind sie auf dem Walzenkern vorgesehen.

Der Nachteil solcher Lösungen ist darin zu sehen, dass das Herstellungsverfahren sehr aufwändig ist und die thermische Belastung beim Aufbringen der Bezüge für die Sensoren sehr hoch ist. Darüber hinaus lassen sich bereits im Einsatz befindliche Walzen nicht mit Sensoren nachrüsten.

Weitere Lösungen zur Erfassung eines Parameters in einer Walze sind aus WO2012113747 A1, US 20010032924 A1 oder WO 2013104600 A1 bekannt.

Vor diesem Hintergrund besteht eine der Aufgaben der vorliegenden Erfindung darin, eine technische Walze der vorgenannten Art so weiterzubilden, dass ihre Herstellung sehr einfach ist und sie auch nachträglich mit Sensoren ausgestattet werden kann.

Diese Aufgabe wird von der eingangs genannten technischen Walze, dadurch gelöst, dass ein Leerrohr vorgesehen ist, das zur Aufnahme einer Polymerfaser geeignet ist und sich über die Länge der Walze erstreckt, derart, dass die Polymerfaser an einem Ende des Leerrohrs einbringbar ist.

D. h. mit anderen Worten, dass die Walze in üblicher Weise hergestellt wird, wobei lediglich beim Aufbringen des Bezugs ein Leerrohr vorgesehen werden muss. Der Aufwand hierfür ist sehr gering. Nach Fertigung der Walze kann nun eine Polymerfaser in das Leerrohr eingebracht werden. Bei einer solchen Polymerfaser handelt es sich um eine spezielle Polymer-basierte optische Faser, wie sie in WO 2015/1811551 offenbart ist. Eine solche Polymerfaser dient als Sensor zur Erfassung unterschiedlicher Parameter, insbesondere Temperatur und Druck.

Mithilfe dieser Polymerfaser und einer entsprechend vorzusehenden Erfassungseinrichtung können während des Betriebs der Walze die genannten Parameter erfasst und zur weiteren Auswertung beispielsweise an einen Computer übermittelt werden.

Es zeigt sich, dass diese erfindungsgemäße Lösung eine sehr kostengünstige Herstellung der Walze ermöglicht, da nur ein Leerrohr vorgesehen werden muss. Der bisherige Herstellungsablauf ändert sich dadurch nur unwesentlich. Durch das vorgesehene Leerrohr kann dann zu einem beliebigen späteren Zeitpunkt die Installation der Sensorik in Form der Polymerfasern und entsprechender elektronischer Komponenten nachgerüstet werden.

Die Aufgabe wird damit vollkommen gelöst.

Bei einer bevorzugten Weiterbildung ist das Leerrohr außerhalb des Walzenkerns angeordnet.

Diese Maßnahme hat den Vorteil, dass die Herstellung günstiger ist, da der Walzenkern selbst nicht bearbeitet werden muss.

Bei einer bevorzugten Weiterbildung sind auf dem Walzenkern mehrere Bezüge bzw. Schichten oder Layer vorgesehen, wobei der erste Bezug den äußeren Bezug (Top-Layer) bildet und das Leerrohr zwischen Walzenkern und äußerem Bezug angeordnet ist.

Dies hat den Vorteil, dass das Leerrohr und damit auch die später einzuführende Polymerfaser nur einen geringen Abstand zu der Walzenoberfläche besitzt, sodass insbesondere die auf die Walzenoberfläche wirkenden Druckkräfte besser erfasst werden können.

In einer bevorzugten Weiterbildung ist das Leerrohr an die Polymerfaser derart angepasst, dass die Polymerfaser an der Innenseite des Leerrohrs anliegt. Bevorzugt hat das Leerrohr einen Innendurchmesser von 300 µm bis 600 µm, vorzugsweise 400 µm bis 500 µm, weiter bevorzugt 425 µm.

Die Erfassung der Parameter verbessert sich deutlich, wenn die Polymerfaser dicht an der Innenwandung des Leerrohrs anliegt.

Bei der bevorzugten Weiterbildung erstreckt sich das Leerrohr über die gesamte Länge des Bezugs, und beide Enden des Leerrohrs sind von außen zugänglich.

Dies hat den Vorteil, dass das Einbringen der Polymerfaser leichter ist, wenn beide Enden des Leerrohrs von außen zugänglich sind.

Bei der bevorzugten Weiterbildung ist das Leerrohr aus einem Kunststoff, insbesondere einem Co-Polyester oder einem Polyamid hergestellt.

Dieses Material hat sich als besonders vorteilhaft herausgestellt.

Bei der bevorzugten Weiterbildung sind mehrere Leerrohre vorgesehen, die vorzugsweise gleichmäßig in Umfangsrichtung der Walze verteilt sind.

Der Einsatz mehrerer Leerrohre ermöglicht die Verwendung mehrerer Polymerfasern, die pro Umdrehung einer Walze mehrere Messwerte liefern können und damit eine bessere Auswertung ermöglichen.

Bei einer bevorzugten Weiterbildung erstreckt sich das Leerrohr parallel zur Längsachse der Walze. D. h. mit anderen Worten, dass das Leerrohr und die Längsachse der Walze in einer Ebene liegen.

Alternativ ist es auch denkbar, dass Leerrohr schräg zur Längsachse vorzusehen.

Bevorzugt, hat die Walze eine Länge von mehreren Metern und eine maximale Länge von bis zu 12 m.

Die der Erfindung zugrunde liegende Aufgabe wird auch von einem Verfahren zum Einbringen einer Polymerfaser in ein Leerrohr einer technischen Walze, wie sie beispielsweise zuvor beschrieben wurde, gelöst, wobei das Verfahren folgende Schritte aufweist:
Bereitstellen einer Polymerfaser mit einem vorderen Ende,
Einbringen des vorderen Endes der Polymerfaser in das Leerrohr an dessen einem Ende,
Anlegen eines Vakuums am anderen Ende des Leerrohrs oder Anlegen von Druckluft am Ende des Leerrohrs, und
Durchführen der Polymerfaser durch das Leerrohr über das angelegte Vakuum bzw. die angelegte Druckluft.

Der Vorteil dieses Verfahrens ist darin zu sehen, dass das Einbringen der Polymerfaser in das Leerrohr nach Fertigstellung der Walze mit wenig Aufwand gelingt. Durch das an einem Ende angelegte Vakuum bzw. die Druckluft kann die Polymerfaser durch das Leerrohr "gesaugt" bzw. "geblasen" werden, sodass auch die Gefahr von Beschädigungen der Polymerfaser sehr gering ist.

Bevorzugt wird die Polymerfaser vor dem Einbringen in das Leerrohr mit einem Klebstoff versehen, derart, dass keine bzw. nahezu keine Freiräume zwischen Polymerfaser und Innenseite des Leerrohrs vorhanden sind. Alternativ ist es auch denkbar, den Klebstoff nach dem Einbringen der Polymerfaser zu injizieren.

Diese Maßnahme hat den Vorteil, dass die Erfassungsqualität verbessert wird, da die Polymerfaser über den Klebstoff großflächig Kontakt mit dem Leerrohr hat und die Übertragung der Temperatur bzw. der Druckkräfte sehr gut ist.

Bei der bevorzugten Weiterbildung der technischen Walze ist eine Messeinrichtung vorgesehen, die ausgelegt ist, Licht in die Polymerfaser einzukoppeln und reflektiertes Licht aus der Polymerfaser als Messwert zu erfassen. Bevorzugt weist die Messeinrichtung eine Auswerteeinheit auf, die aus einem oder mehreren erfassten Messwerten einen oder mehrere Parameter ermittelt, vorzugsweise Druck, Temperatur oder Feuchtigkeit.

Bei einer bevorzugten Weiterbildung weist die Polymerfaser zumindest einen, vorzugsweise mehrere in Längsrichtung verteilte Messpunkte auf.

D. h. mit anderen Worten, dass mehrere Parameter entlang der Länge der Polymerfaser und damit an unterschiedlichen Stellen der Walze erfassbar sind.

Bei einer bevorzugten Weiterbildung weist die Messeinrichtung eine Übertragungseinheit auf, die ausgelegt ist, die Messwerte und/oder die ermittelten Parameter drahtlos an eine zentrale Einheit, bspw. einen Computer, zur weiteren Verarbeitung zu übermitteln.

Diese Maßnahme hat den Vorteil, dass die Datenübertragung sehr einfach möglich ist, da keine Leitungen von der Walze zu einer zentralen Einheit erforderlich werden.

Bei der bevorzugten Weiterbildung ist statt oder zusätzlich zu einer Batterie eine Energiegewinnungseinheit vorgesehen, die die Messeinrichtung mit Energie versorgt. Bevorzugt erzeugt die Energiegewinnungseinheit durch Drehung der Walze Energie, vorzugsweise durch Induktion. Weiter bevorzugt weist die Energiegewinnungseinheit eine aufladbare Batterie auf, die die gewonnene Energie speichert bzw. zwischenspeichert.

Diese Maßnahme hat den Vorteil, dass die Messeinrichtung energetisch autark ist, und damit keine Spannungsversorgung von außen oder in Form einer Batterie (bspw. als auswechselbare Batterie oder wieder aufladbare Batterie) benötigt. Durch die Drehung der Walze im Betrieb kann ausreichend Energie erzeugt werden, um die elektronischen Komponenten in der Messeinrichtung mit der erforderlichen Energie zu versorgen.

Bei einer bevorzugten Weiterbildung ist ein Leerrohr vorgesehen, in dem die Polymerfaser verläuft.

Es versteht sich, dass die vorstehend genannten und die nachstehend noch zu erläuternden Merkmale nicht nur der jeweils angegebenen Kombination, sondern auch in anderen Kombinationen oder in Alleinstellung verwendbar sind.

Weitere Vorteile und Ausgestaltungen der Erfindung ergeben sich aus der Beschreibung und der beiliegenden Zeichnung. Dabei zeigen:
Figur 1 eine schematische Darstellung einer technischen Walze mit einem Bezug;
Figur 2 eine schematische Darstellung der Walze aus Figur 1 in einer Längsansicht;
Figur 3 eine schematische Darstellung einer Walze mit mehreren Bezügen in Längsansicht;
Figur 4 eine schematische Darstellung der Walze gemäß Figur zwei mit einer eingeführten Polymer Faser und angebrachter Erfassungseinrichtung;
Figur 5 eine schematische Blockdarstellung der Erfassungseinrichtung; und
Figur 6 ein Blockdiagramm zur Erläuterung des Verfahrens.

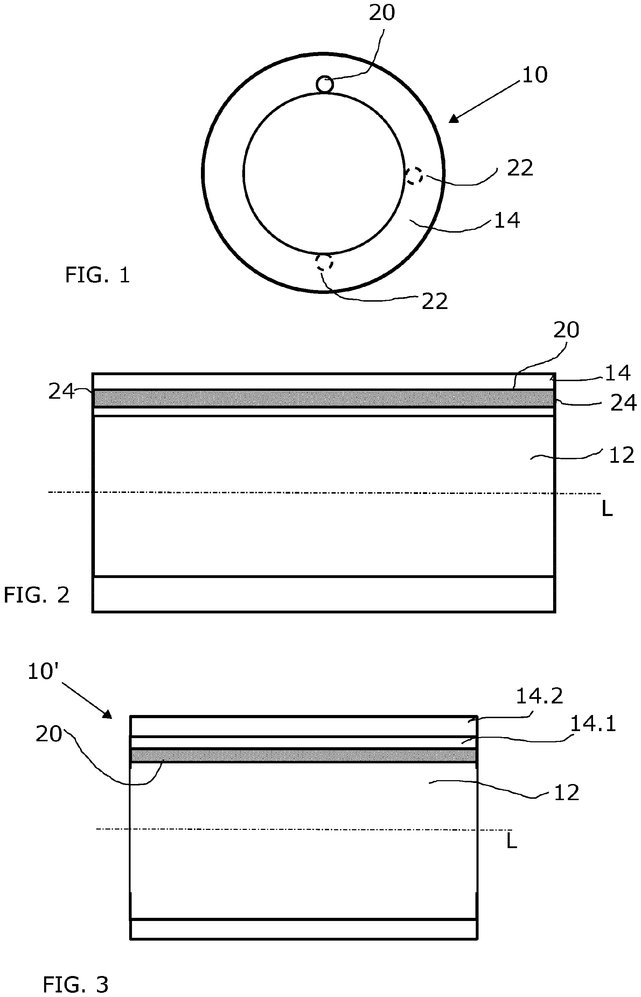

In Figur 1 ist eine technische Walze in stark vereinfachter Form in einer Vorderansicht dargestellt und mit dem Bezugszeichen 10 gekennzeichnet. Die entsprechende Darstellung in Längsansicht ist in Figur 2 dargestellt.

Derartige technische Walzen werden in den unterschiedlichsten Anwendungsbereichen eingesetzt, beispielsweise bei der Papierherstellung, der Tissueherstellung, der Papier- oder Tissue-Weiterbearbeitung oder der Folienherstellung. Derartige technische Walzen werden unter anderem auch als Saugpresswalzen, Presswalzen, Filmpresswalzen, Multi-Nip-Walzen, Soft-Walzen, Super-Walzen, Prägekalanderwalzen, Zentralpress-Walzen, Leitwalzen, Leimpress-Walzen oder Coater-Walzen, um nur einige beispielhaft zu nennen, eingesetzt.

Allgemein hat eine solche technische Walzen 10 einen Walzenkern 12 aus Metall und zumindest eine Beschichtung 14, die auch als Bezug 14 bezeichnet wird. In Figur 1 ist die Walze 10 mit einem einschichtigen Bezug 14 dargestellt, wobei in vielen Anwendungsfällen auch mehrschichtige Bezüge 14 eingesetzt werden. Ein Beispiel eines Zweischicht-Bezugs mit 2 Schichten 14.1 und 14.2 ist beispielhaft in Figur 3 dargestellt. Es versteht sich, dass auch drei oder mehr Schichten vorgesehen sein können.

Der Bezug 14 der Walze 10 kann aus einem Gummimaterial, einem Komposit-Material oder einem Polyurethan-Material aufgebaut sein. Auch Kombinationen dieser Materialien in mehrschichtigen Bezügen ist denkbar.

Die in Figur 1 gezeigte Walze 10 besitzt zumindest ein Leerrohr 20, bevorzugt auch weitere Leerrohre 22, die sich über die gesamte Länge der Walze 10 erstrecken und angrenzend an den Walzenkern 12 im Bereich des Bezugs 14 vorgesehen sind. Das Leerrohr 20 ist vorzugsweise aus einem Kunststoffmaterial hergestellt und besitzt einen Innendurchmesser von 300 µm bis 600 µm, bevorzugt 425 µm. Es dient dazu, eine Polymerfaser 30 aufzunehmen, die später noch im Detail erläutert werden wird.

Das Leerrohr 20 besitzt zwei offene Enden 24, die an den jeweiligen Stirnseiten der Walze 10 von außen zugänglich sind. D. h. mit anderen Worten, dass von einer der beiden Stirnseiten aus die Polymerfaser in die entsprechende Öffnung 24 des Leerrohrs 20 eingebracht werden kann.

Das Leerrohr 20 kann in einfacher Weise beim Aufbringen des Bezugs 14 auf den Walzenkern 12 vorgesehen werden. Besondere aufwändige Herstellungsschritte sind hierfür nicht erforderlich. Es ist lediglich dafür Sorge zu tragen, dass das Material des Leerrohrs 20 den thermischen Bedingungen beim Aufbringen des Bezugs 14 standhält. Darüber hinaus ist es bei der Auswahl des Materials für das Leerrohr 20 wichtig, dass es sich um ein nachgiebiges Material handelt, dass sich bei den zu messenden Druckkräften verformen kann.

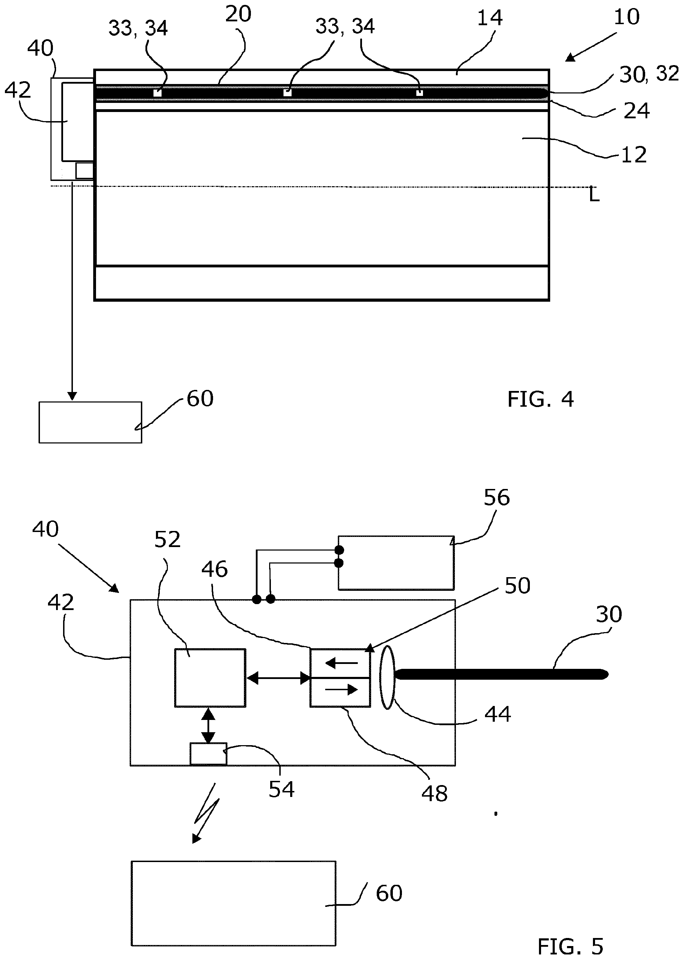

In Figur 4 ist nun die technische Walze 10 von Figur 2 dargestellt, wobei sich eine Polymerfaser 30 in dem Leerrohr 20 befindet.

Die Polymerfaser 30 dient als optischer Sensor 32 zur Messung verschiedener Parameter, wie beispielsweise Feuchtigkeit, Druck und/oder Temperatur. Bei der Polymerfaser 30 handelt es sich um eine polymerbasierte optische Wellenleiterstruktur, die ein oder mehrere Reflexions-Strukturen 33 (bspw. in Form von interferometrischen Reflektionspunkten) in Längsrichtung verteilten aufweist, wobei an diesen Gitterstrukturen die verschiedenen Parameter erfasst werden können. Die Reflexions-Strukturen legen folglich die Messpunkte 34 entlang der Polymerfaser fest.

Der genaue Aufbau einer solchen Polymer-basierten optischen Wellenleiter-Struktur, kurz Polymerfaser genannt, ist in der Druckschrift WO 2015/181155A1 beschrieben. Deren Offenbarungsgehalt, insbesondere im Hinblick auf den Aufbau der Polymerfaser, wird durch Bezugnahme hiermit in die vorliegende Beschreibung vollständig aufgenommen. Eine solche Polymerfaser wird von der Firma Shute, 3490 Kvistgaard, Dänemark, angeboten.

Die Messung der verschiedenen genannten Parameter erfolgt dadurch, dass Licht in die Polymerfaser eingekoppelt wird, und dass das an den Gitter-Strukturen, d.h. Messpunkten, reflektierte Licht erfasst wird. Abhängig von den genannten Parametern, die an den verschiedenen Positionen in Längsrichtung der Gitter-Strukturen vorliegen, wird das Licht unterschiedlich reflektiert, sodass über diesen Zusammenhang auf die Parameter an den Messpunkten rückgeschlossen werden kann. Die örtliche Auflösung der verschiedenen Messpunkte, die durch die Gitter-Strukturen vorgegeben sind, erfolgt über die unterschiedlichen Laufzeiten des reflektierten Lichts.

Die Erfinder haben überraschenderweise festgestellt, dass die auf die Walzenoberfläche wirkenden Druckkräfte sehr gut über die Polymerfaser 30 erfassbar sind, obgleich sich die Polymerfaser nicht in unmittelbarer Nähe der Walzenoberfläche, sondern in einem gewissen Abstand von der Walzenoberfläche befindet.

Eine Messung der Parameter ist somit im Betrieb der Walze möglich, wobei im besten Fall bei jeder Umdrehung ein oder mehrere Messwerte abhängig von der Reflexions-Struktur (bzw. der Anzahl der Reflektionspunkte) geliefert werden kann. Üblicherweise werden jedoch die Messwerte nicht bei jeder Umdrehung, sondern im Abstand mehrerer Umdrehungen erfasst, gegebenenfalls auch in Längsrichtung der Walze zeitlich gestaffelt. D. h. mit anderen Worten, dass die Messwerte an den verschiedenen Messpunkten der Polymerfaser zu unterschiedlichen Umdrehungszeitpunkten erfasst werden. Selbstverständlich können pro Umdrehung auch alle Messwerte der verschiedenen Messpunkte erfasst werden.

Zum Einkoppeln des Lichts und zum Erfassen des reflektierten Lichts ist eine Erfassungseinrichtung 40 an einer Stirnseite der Walze 10 vorgesehen, wie in Figur 4 gezeigt.

Wie in Figur 5 dargestellt, weist die Erfassungseinrichtung 40 eine Messeinheit 42 auf, die beispielsweise eine optische Linse 44 umfasst, über die das von einem optischen Strahler 48, beispielsweise eine LED, erzeugte Licht in die Polymerfaser 30 eingekoppelt und das reflektierte Licht einem optischen Sensor 46, beispielsweise in Form einer Fotodiode bzw. eines Fototransistor oder eines optischen Spektrometers zugeführt wird. Es sei an dieser Stelle jedoch erwähnt, dass zum Einkoppeln des Lichts nicht notwendigerweise eine optische Linse erforderlich ist. Der optische Sensor 46 sowie der optische Strahler 48 können auch in Form einer Laserdiodeneinheit 50 vorgesehen werden. Es sind mittlerweile Laserdioden erhältlich, die beide Funktionen ausführen können, nämlich Licht auszustrahlen und reflektiertes Licht zu erfassen.

Die Laserdiodeneinheit 50 ist mit einer Auswerteeinheit 52 verbunden, die die Steuerung der Laserdiodeneinheit übernimmt und die entsprechenden empfangenden Messsignale auswertet. Die ausgewerteten Messsignale werden von der Auswerteeinheit 52 an eine Übertragungseinheit 54 übermittelt, die drahtlos, beispielsweise über eine WiFi oder Bluetooth-Technik die Daten an einen Computer 60 übermittelt. Dort stehen die gemessenen Daten dann für eine weitere Auswertung zur Verfügung.

Die Energieversorgung der Messeinheit 42 erfolgt bevorzugt autark über eine Energiegewinnungseinheit 56.

Die Energiegewinnungseinheit 56 enthält eine wieder aufladbare Batterie, die dazu dient, gewonnene elektrische Energie zwischen zu speichern. Elektrische Energie kann durch die Drehung der Walze 10 im Betrieb beispielsweise induktiv gewonnen werden. Mit dieser Lösung können Kabel zu der Erfassungseinrichtung 40 zur Energieversorgung vermieden werden.

Durch die Ausrüstung der Walze 10 mit einer oder mehreren Polymerfasern 30 können unterschiedliche Parameter im Betrieb der Walze erfasst und ausgewertet werden. Die Nutzung dieser Parameter ist vielfältig. So kann beispielsweise durch die Auswertung der gemessenen Parameter der Nip sehr gut eingestellt werden. Auch Rückschlüsse auf den Verschleiß des Bezugs 14 können aus den gemessenen Parametern abgeleitet werden.

Die beschriebene Sensorik bestehend aus Erfassungseinrichtung und Polymerfaser 30 lässt sich bei einer Walze 10 mit vorhandenem Leerrohr 20 jederzeit nachrüsten. Das hat den großen Vorteil, dass der Kunde zunächst eine technische Walze ohne Sensorik erwerben kann, und dann später die Sensorik nachrüsten kann. Der Aufwand für die Nachrüstung ist gering, da es lediglich erforderlich ist, die Polymerfaser 30 in das Leerrohr 20 einzubringen und die entsprechende Erfassungseinrichtung 40 an der Stirnseite der Walze anzubringen.

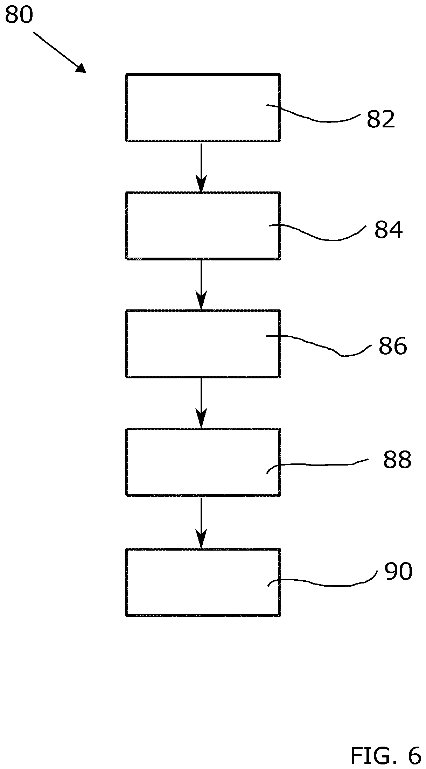

Zum Einbringen der Polymerfaser 30 in das Leerrohr 20 wird zunächst die Polymerfaser bereitgestellt und mit einem Klebstoff versehen, Schritte 82 und 84 in Figur 6.

Anschließend wird das vordere Ende der Polymerfaser in die Öffnung 24 des Leerrohrs an einer Stirnseite eingebracht, Schritt 86.

Auf der gegenüberliegenden Stirnseite der Walze 10 wird eine Saugvorrichtung im Bereich der Öffnung 24 des Leerrohrs 20 angebracht, um im Leerrohr 20 ein Vakuum zu erzeugen. Da auf der gegenüberliegenden Seite die Polymerfaser 30 zusammen mit dem aufgebrachten Klebstoff die entsprechende Öffnung 24 abdichtet, sorgt das Vakuum im Leerrohr 20 dafür, dass die Polymerfaser 30 durch das Leerrohr 20 hindurch gezogen wird, Schritte 88 und 90. Alternativ wird auf der Stirnseite der Walze 10 eine Druckluftvorrichtung angebracht, um die Polymerfaser 30 quasi durch das Leerrohr zu "blasen".

Es ist ersichtlich, dass dieser Vorgang des Einbringens der Polymerfaser 30 ohne großen Aufwand möglich ist. Wichtig dabei ist lediglich, dass die Polymerfaser 30 zusammen mit dem Klebstoff einen möglichst vollflächigen Kontakt mit der Innenseite des Leerrohrs erzielt, sodass auch im späteren Betrieb gewährleistet ist, dass die auf das Leerrohr wirkenden Druckkräfte direkt auf die Polymerfaser übertragen werden.

Insgesamt zeigt sich, dass die vorliegende Erfindung eine deutlich verbesserte technische Walze ermöglicht, die sehr leicht mit einer sehr flexibel einsetzbaren Sensorik ausgerüstet bzw. nachgerüstet werden kann.

## Patentansprüche

1. Technische Walze, insbesondere für die Papierherstellung, mit
einem länglichen Walzenkern (12), und
zumindest einem ersten Bezug (14), der auf dem Walzenkern (12) vorgesehen ist, **gekennzeichnet durch**
ein Leerrohr (20, 22), das zur Aufnahme einer Polymerfaser (30) geeignet ist und sich über die Länge der Walze (10) erstreckt, derart, dass die Polymerfaser an einem Ende des Leerrohrs einbringbar ist.

2. Technische Walze nach Anspruch 1, **dadurch gekennzeichnet, dass** das Leerrohr (20) außerhalb des Walzenkern (12) angeordnet ist.

3. Technische Walze nach Anspruch 1 oder 2, **dadurch gekennzeichnet, dass** auf dem Walzenkern (12) mehrere Bezüge (14.1, 14.2) vorgesehen sind, wobei der erste Bezug (14.2) den äußeren Bezug bildet und das Leerrohr (20) zwischen Walzenkern (12) und äußerem Bezug (14.2) angeordnet ist.

4. Technische Walze nach einem der vorhergehenden Ansprüche, **dadurch gekennzeichnet, dass** das Leerrohr (20) an die Polymerfaser (30) derart angepasst ist, dass die Polymerfaser an der Innenseite des Leerrohrs anliegt.

5. Technische Walze nach einem der vorhergehenden Ansprüche, **dadurch gekennzeichnet, dass** das Leerrohr (20) einen Innendurchmesser von 300 µm bis 600 µm, vorzugsweise 400 µm bis 500 µm, weiter bevorzugt 425 µm, besitzt.

6. Technische Walze nach einem der vorhergehenden Ansprüche, **dadurch gekennzeichnet, dass** sich das Leerrohr (20) über die gesamte Länge des Bezugs (14) erstreckt und beide Enden (24) des Leerrohrs von außen zugänglich sind.

7. Technische Walze nach Anspruch 6, **dadurch gekennzeichnet, dass** das Leerrohr (20) aus einem Kunststoff, insbesondere einem Copolyester oder Polyamid hergestellt ist.

8. Technische Walze nach einem der vorhergehenden Ansprüche, **dadurch gekennzeichnet, dass** mehrere Leerrohre (20, 22) vorgesehen sind.

9. Technische Walze nach einem der vorhergehenden Ansprüche, **dadurch gekennzeichnet, dass** das Leerrohr (20) sich parallel zur Längsachse (L) der Walze (10) erstreckt.

10. Technische Walze nach einem der Ansprüche 1 bis 8, **dadurch gekennzeichnet, dass** sich das Leerrohr (20) schräg zur Längsachse (L) erstreckt.

11. Technische Walze nach einem der vorhergehenden Ansprüche, **dadurch gekennzeichnet, dass** sie eine Länge von bis zu 12 m aufweist.

12. Verfahren zum Einbringen einer Polymerfaser in ein Leerrohr einer technischen Walze, vorzugsweise einer technischen Walze nach einem der Ansprüche 1 bis 11, mit den Schritten:
Bereitstellen einer Polymerfaser mit einem vorderen Ende
Einbringen des vorderen Endes in das Leerrohr an dessen einem Ende,
Anlegen eines Vakuums am anderen Ende des Leerrohrs oder Anlegen von Druckluft am Ende des Leerrohrs, und
Durchziehen der Polymerfaser durch das Leerrohr durch das angelegte Vakuum, bzw. Durchschieben der Polymerfaser durch das Leerrohr durch die angelegte Druckluft.

13. Verfahren nach Anspruch 12, wobei die Polymerfaser vor dem Einbringen in das Leerrohr mit einem Klebstoff versehen wird, derart, dass keine bzw. nahezu keine Freiräume zwischen Polymerfaser und Innenseite des Leerrohrs vorhanden sind.

14. Verfahren nach Anspruch 12, wobei nach dem Einbringen der Polymerfaser in das Leerrohr Kunststoff in das Leerrohr injiziert wird.

15. Verfahren nach Anspruch 12, 13 oder 14, wobei die Polymerfaser nach vollständiger Fertigung der technischen Walze eingebracht wird.

## Claims

1. A technical roll, in particular for paper production, comprising
an elongate roll core (12), and
at least one first cover (14) provided on the roll core (12), **characterized by**
an empty conduit (20, 22) suitable for receiving a polymer fiber (30) and extending over the length of the roll (10) such that the polymer fiber can be introduced at one end of the empty conduit.

2. The technical roll according to claim 1, **characterized in that** the empty conduit (20) is arranged outside the roll core (12).

3. The technical roll according to claim 1 or 2, **characterized in that** a plurality of covers (14.1, 14.2) is provided on the roll core (12), the first cover (14.2) forming the outer cover and the empty conduit (20) being arranged between the roll core (12) and the outer cover (14.2).

4. The technical roll according to one of the preceding claims,
**characterized in that** the empty conduit (20) is adapted to the polymer fiber (30) such that the polymer fiber rests on the inside of the empty conduit.

5. The technical roll according to one of the preceding claims,
**characterized in that** the empty conduit (20) has an inner diameter of 300 µm to 600 µm, preferably 400 µm to 500 µm, more preferably 425 µm.

6. The technical roll according to one of the preceding claims,
**characterized in that** the empty conduit (20) extends over the entire length of the cover (14) and both ends (24) of the empty conduit are accessible from the outside.

7. The technical roll according to claim 6, **characterized in that** the empty conduit (20) is made of a plastics material, in particular a copolyester or polyamide.

8. The technical roll according to one of the preceding claims,
**characterized in that** a plurality of empty conduits (20, 22) is provided.

9. The technical roll according to one of the preceding claims, **characterized in that** the empty conduit (20) extends in parallel with the longitudinal axis (L) of the roll (10).

10. The technical roll according to one of claims 1 to 8, **characterized in that** the empty conduit (20) extends obliquely to the longitudinal axis (L).

11. The technical roll according to one of the preceding claims,
**characterized in that** it has a length of up to 12 m.

12. A method for introducing a polymer fiber into an empty conduit of a technical roll, preferably a technical roll according to one of claims 1 to 11, comprising the steps of:
providing a polymer fiber having a front end
introducing the front end into the empty conduit at one end thereof,
applying a vacuum at the other end of the empty conduit or applying compressed air at the end of the empty conduit, and
pulling the polymer fiber through the empty conduit using the applied vacuum, or pushing the polymer fiber through the empty conduit using the applied compressed air.

13. The method according to claim 12, wherein the polymer fiber is provided with an adhesive before being introduced into the empty conduit, such that no or almost no spaces are present between the polymer fiber and the inside of the empty conduit.

14. The method according to claim 12, wherein after introducing the polymer fiber into the empty conduit, plastics material is injected into the empty conduit.

15. The method according to claim 12, 13 or 14, wherein the polymer fiber is introduced after complete manufacture of the technical roll.

## Revendications

1. Cylindre technique, en particulier pour la fabrication du papier, comportant
un noyau de cylindre (12) allongé, et
au moins un premier revêtement (14) qui est prévu sur le noyau de cylindre (12), **caractérisé par**
un tube vide (20, 22) qui est apte à recevoir une fibre polymère (30) et qui s'étend sur la longueur du cylindre (10) de telle sorte que la fibre polymère peut être insérée au niveau d'une extrémité du tube vide.

2. Cylindre technique selon la revendication 1, **caractérisé en ce que** le tube vide (20) est disposé à l'extérieur du noyau de cylindre (12).

3. Cylindre technique selon la revendication 1 ou 2, **caractérisé en ce que** plusieurs revêtements (14.1, 14.2) sont prévus sur le noyau de cylindre (12), dans lequel le premier revêtement (14.2) forme le revêtement extérieur et le tube vide (20) est disposé entre le noyau de cylindre (12) et le revêtement extérieur (14.2).

4. Cylindre technique selon l'une des revendications précédentes, **caractérisé en ce que** le tube vide (20) est adapté à la fibre polymère (30) de telle sorte que la fibre polymère est appliquée sur la face intérieure du tube vide.

5. Cylindre technique selon l'une des revendications précédentes, **caractérisé en ce que** le tube vide (20) possède un diamètre intérieur allant de 300 µm à 600 µm, de préférence de 400 µm à 500 µm, de manière particulièrement préférée de 425 µm.

6. Cylindre technique selon l'une des revendications précédentes,
**caractérisé en ce que** le tube vide (20) s'étend sur toute la longueur du revêtement (14) et les deux extrémités (24) du tube vide sont accessibles depuis l'extérieur.

7. Cylindre technique selon la revendication 6, **caractérisé en ce que** le tube vide (20) est fabriqué en une matière plastique, en particulier en un copolyester ou en un polyamide.

8. Cylindre technique selon l'une des revendications précédentes,
**caractérisé en ce que** plusieurs tubes vides (20, 22) sont prévus.

9. Cylindre technique selon l'une des revendications précédentes, **caractérisé en ce que** le tube vide (20) s'étend parallèlement à l'axe longitudinal (L) du cylindre (10).

10. Cylindre technique selon l'une des revendications 1 à 8,
**caractérisé en ce que** le tube vide (20) s'étend obliquement par rapport à l'axe longitudinal (L).

11. Cylindre technique selon l'une des revendications précédentes, **caractérisé en ce qu'**il présente une longueur allant jusqu'à 12 m.

12. Procédé permettant l'insertion d'une fibre polymère dans un tube vide d'un cylindre technique, de préférence d'un cylindre technique selon l'une des revendications 1 à 11, comportant les étapes consistant à :
fournir une fibre polymère comportant une extrémité avant
insérer l'extrémité avant dans le tube vide au niveau de l'une de ses extrémités,
appliquer un vide au niveau de l'autre extrémité du tube vide ou appliquer de l'air comprimé au niveau de l'extrémité du tube vide, et
tirer la fibre polymère à travers le tube vide par le vide appliqué ou pousser la fibre polymère à travers le tube vide par l'air comprimé appliqué.

13. Procédé selon la revendication 12, dans lequel la fibre polymère est garnie d'un adhésif avant d'être insérée dans le tube vide de telle sorte qu'aucun ou presque aucun espace libre n'existe entre la fibre polymère et la face intérieure du tube vide.

14. Procédé selon la revendication 12, dans lequel, après l'insertion de la fibre polymère dans le tube vide, de la matière plastique est injectée dans le tube vide.

15. Procédé selon la revendication 12, 13 ou 14, dans lequel la fibre polymère est insérée après la production complète du cylindre technique.
